# EUROPÄISCHE PATENTSCHRIFT

(11) **EP 0 485 403 B1**
(45) Veröffentlichungstag und Bekanntmachung des Hinweises auf die Patenterteilung: **14.09.1994**
(21) Anmeldenummer: 90910637.9
(22) Anmeldetag: 29.06.1990
(51) Int. Cl.: G11B 7/08, G02B 7/02

(54) **HALTERUNG FÜR EIN OPTISCHES ELEMENT**
MOUNT FOR AN OPTICAL ELEMENT
FIXATION POUR UN ELEMENT OPTIQUE

(30) Priorität: 21.07.1989 DE 3924189
(43) Veröffentlichungstag der Anmeldung: 20.05.1992
(73) Patentinhaber: Deutsche Thomson-Brandt GmbH, 78003 Villingen-Schwenningen (DE)
(72) Erfinder: WEISSMANN, Gerhard, D-7730 Villingen-Schwenningen (DE)
(86) Internationale Anmeldenummer: EP9001037
(87) Internationale Veröffentlichungsnummer: WO9101550

(56) Entgegenhaltungen:
- PATENT ABSTRACTS OF JAPAN, Band 13, Nr. 162 (P-859)(3510), 19. April 1989;& JP-A-64001123
- PATENT ABSTRACTS OF JAPAN, Band 7, Nr. 48 (P-178)(1193), 24. Februar 1983;& JP-A-57195339
- PATENT ABSTRACTS OF JAPAN, Band 7, Nr. 42 (P-177)(1187), 19. Februar 1983; & JP-A-57191838

## Beschreibung

Die Erfindung betrifft eine Halterung für ein optisches Element zum Einsetzen in ein Gehäuse.

Eine derartige Halterung wird z.B. in der Abtastvorrichtung eines CD-Spielers, eines sogenannten optical pick-ups benötigt. In der Halterung kann z.B. eine Linse oder ein optisches Gitter angeordnet sein. Die Halterung mit der Linse oder dem optischen Gitter ist in das Gehäuse der optischen Abtastvorrichtung eingesetzt.

Aus der JP-A 61 001123 ist ein optischer Abtastkopf bekannt. Im Innern des Abtastkopfes ist eine Linse in einem Tubus angeordnet. Auf der einen Stirnseite der Linse liegt eine Schraubenfeder, die sich am einen Ende des Tubus abstützt und die andere Stirnseite der Linse gegen das andere Ende des Tubus drückt. Weil dieser Abtastkopf aus mehreren Bauteilen aufgebaut ist, erfordert seine Herstellung mehrere schwierige Arbeitsschritte.

Aufgabe der Erfindung ist es nun, die Halterung so zu gestalten, daß sie ohne großen Arbeitsaufwand herstellbar und in das Gehäuse der optischen Abtastvorrichtung einsetzbar ist.

Die Erfindung löst diese Aufgabe dadurch, daß das Federelement als Ring ausgeführt ist, der gekrümmt ist und der mittels zwei Stegen an der anderen Stirnseite befestigt ist.

Es zeigen
- Figur 1: eine Seitenansicht eines Ausführungsbeispiels
- Figur 2: einen Schnitt durch das Ausführungsbeispiel
- Figur 3: das Ausführungsbeispiel von oben
- Figur 4: das Ausführungsbeispiel von unten
- Figur 5: wie das Ausführungsbeispiel in ein Gehäuse eingepaßt ist.

Anhand des in den Figuren dargestellten Ausführungsbeispiels wird die Erfindung nun beschrieben und erläutert.

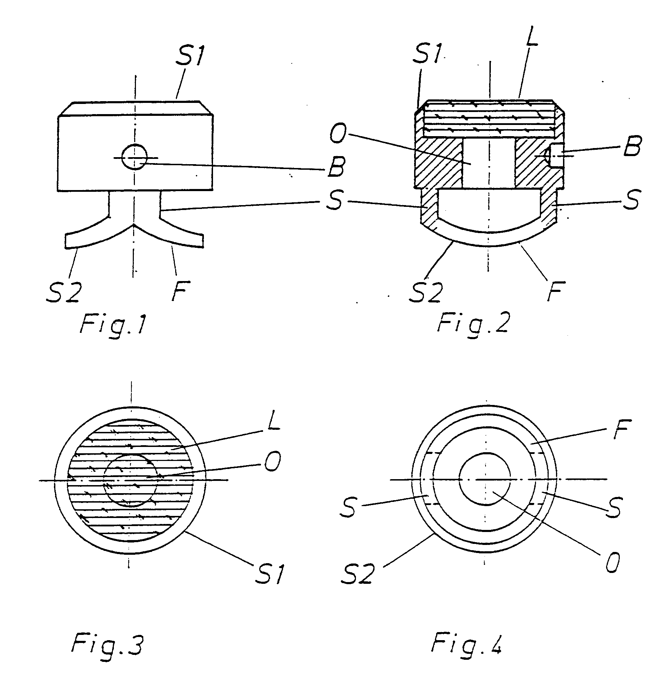

Figur 1 zeigt eine zylinderförmige Halterung, in deren einen Stirnseite S1 das optische Element L, z.B. ein optisches Gitter oder eine Linse, eingepaßt ist. An der anderen Stirnseite S2 sind zwei Stege S angesetzt, die ein ringförmiges Federelement F tragen, das an den Stegen S nach innen gekrümmt ist. Seitlich ist eine Bohrung B angebracht, deren Zweck später erläutert wird.

In Figur 1 ist ein Schnitt durch die Halterung gezeigt, die um 90° zur Ansicht aus Figur 1 gedreht ist. An der einen Stirnseite S1 ist eine Aussparung vorgesehen, in die das optische Gitter oder die Linse L eingepaßt ist. Zentral verläuft eine öffnung 0 für das Licht, die zusätzlich als Aperturblende dienen kann.

In Figur 3 ist die eine Stirnseite S1 der Halterung mit dem optischen Element L abgebildet. In Figur 4 ist die andere Stirnseite S2 der Halterung mit dem ringförmigen Federelement F dargestellt.

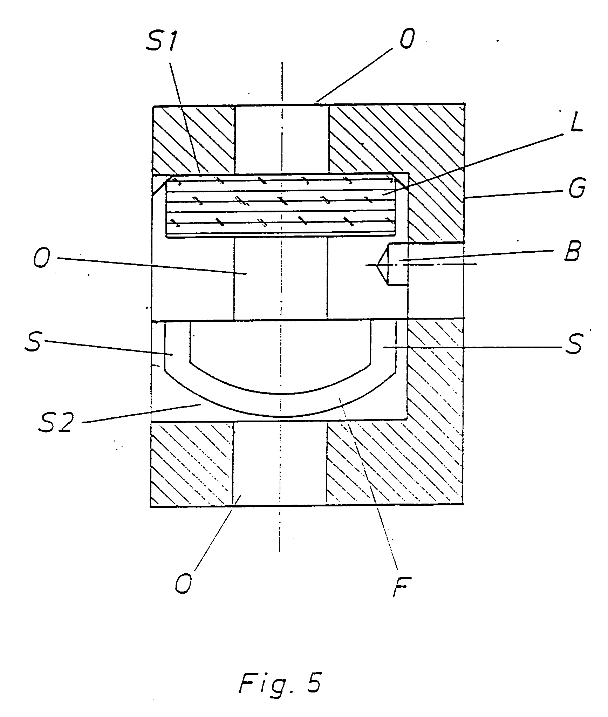

In Figur 5 ist die Halterung in das Gehäuse G eingepaßt. Weil das ringförmige Federelement F die eine Stirnseite S1 der Halterung gegen eine Anschlagfläche des Gehäuses G drückt, brauchen keine zusätzlichen Klemm- oder Befestigungsvorrichtungen vorgesehen werden. Weil das ringförmige Federelement F gekrümmt ist, läßt sich die Halterung mit dem optischen Gitter im Gehäuse drehen, so daß das optische Gitter justiert werden kann. Um das optische Gitter L mittels eines Exzenterschlüssels justieren zu können, ist die Bohrung B vorgesehen.

Ein wesentlicher Vorteil der Erfindung ist darin zu sehen, daß die Halterung als Spritzteil aus Kunststoff herstellbar ist. Die Herstellungskosten sind daher wesentlich geringer als bei einer Halterung, die aus mehreren Teilen zusammengesetzt ist.

Die Erfindung ist für optische Abtastvorrichtungen geeignet, wie sie z.B. in CD-Spielern, Videoplattenspielern, DRAW-Disc-Spielern oder magneto-optischen Aufnahme- und Wiedergabegeräten anzutreffen sind.

## Patentansprüche

1. Halterung für ein optisches Element (L) zum Einsetzen in ein Gehäuse (G), bei der auf einer Stirnseite (52) mindestens ein Federelement (F) vorgesehen ist, das außerhalb des Strahlengangs angeordnet ist und beim Einsetzen der Halterung in das Gehäuse (G) die andere Stirnseite (S1) gegen einen Anschlag zu drücken vermag, **dadurch gekennzeichnet**, daß das Federelement (F) als Ring ausgeführt ist, der gekrümmt ist und der mittels zwei Stegen (S) an der anderen Stirnseite (S2) befestigt ist.

2. Halterung nach Anspruch 1, **dadurch gekennzeichnet**, daß die Stege (S) einander gegenüberliegen und daß das ringförmige Federelement (F) von den Stegen (S) ausgehend nach außen gekrummt ist, so daß die Auflagepunkte auf dem Umfang eines Kreises mit demselben Durchmesser wie dem Durchmesser des ringförmigen Federelementes (F) liegen.

3. Halterung nach Anspruch 1 oder 2, **dadurch gekennzeichnet**, daß die Halterung als ein Spritzgußteil aus Kunststoff gefertigt ist.

## Claims

1. A mounting for an optical element (L) for insertion in a housing (G), in which at least one spring element (F) is provided on one face (S2), the element being arranged out of the beam path and, upon insertion of the mounting in the housing (G), tending to press the other face (S1) against a stop element, characterised in that the spring element (F) is constructed as a ring which is bent and which is fixed to the other face (S2) by means of two web members (S).

2. A mounting according to claim 1, characterised in that the web members (S) lie in mutually-opposed positions and that the ring-shaped spring element (F) is bent outwardly from the web members (S), so that the points of support lie on the circumference of a circle with the same diameter as the diameter of the ring-shaped spring element (F).

3. A mounting according to claim 1 or 2, characterised in that the mounting is constructed as an injection-moulded component of plastics material.

## Revendications

1. Fixation pour un élément optique (L) pour mettre en place dans un boîtier (G) pour laquelle au moins un élément ressort (F) est prévu sur l'une des faces frontales (S2), élément ressort qui est placé en dehors de la marche des rayons et qui est capable, lors de la mise en place de la fixation dans le boîtier (G), d'appuyer l'autre face frontale (S1) contre une butée, **caractérisée en ce** que l'élément ressort (F) est réalisé comme un anneau qui est cintré et qui est fixé au moyen de deux barrettes (S) à l'autre face frontale (S2).

2. Fixation selon la revendication 1, **caractérisée en ce** que les barrettes (S) sont situées l'une en face de l'autre et que l'élément ressort (F) en forme d'anneau est cintré vers l'extérieur en partant des barrettes (S) si bien que les points d'appui se situent sur la circonférence d'un cercle de même diamètre que le diamètre de l'élément ressort (F) en forme d'anneau.

3. Fixation selon la revendication 1 ou 2, **caractérisée en ce** que la fixation est fabriquée comme une pièce moulée par injection en matière plastique.
